(19) Europäisches Patentamt
European Patent Office
Office européen des brevets

(11) Publication number: **0 430 254 A2**

# (12) EUROPEAN PATENT APPLICATION

(21) Application number: **90122876.7**

(22) Date of filing: **29.11.90**

(51) Int. Cl.$^5$: **C08L 63/00**, C08L 83/00, C08L 61/14

(30) Priority: **30.11.89 JP 311011/89**
**26.03.90 JP 76460/90**

(43) Date of publication of application:
**05.06.91 Bulletin 91/23**

(84) Designated Contracting States:
**BE DE FR GB Bulletin**

(71) Applicant: **DOW CORNING TORAY SILICONE COMPANY, LIMITED**
**Mitsui Building No. 6,**
**2-3-16,Nihonbashi-Muromachi**
**Chuo-ku Tokyo 103(JP)**

(72) Inventor: **Fuji, Tadashi**
**6, 1-chome, Yushudai Nishi**
**Ichihara-shi, Chiba Prefecture(JP)**
Inventor: **Ueki, Hiroshi**
**6, 1-chome, Yushudai Nishi**
**Ichihara-shi, Chiba Prefecture(JP)**
Inventor: **Ona, Isao**
**2848-46, Kubota, Sodegaura-machi**
**Kimitsu-gun, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

## (54) Curable epoxy resin compositions.

(57) Disclosed are curable epoxy resin molding compositions comprising (a) an epoxy resin, optionally a phenolic resin, and (c) a silicone-modified resin selected from a reaction product of an epoxy resin with an amino-modified polysiloxane having an amino group at only one end of its chain or a reaction product of a phenolic resin with an epoxy-modified polysiloxane having an epoxy group at only one end of its chain. The molding compositions retain good moldability while showing excellent mechanical strength and low internal stress.

EP 0 430 254 A2

## CURABLE EPOXY RESIN COMPOSITIONS

The present invention relates to a curable epoxy resin molding composition. More particularly, this invention relates to a curable epoxy resin which contains a specific silicone-modified resin and has excellent mechanical strength, low internal stress, and good moldability.

The cured products obtained from epoxy resin compositions have excellent electrical properties (dielectric properties, resistivity, dielectric breakdown strength, and so forth) as well as excellent mechanical properties (flexural strength, compression strength, impact strength, and so forth). For these reasons, they are widely employed as insulating materials in a variety of electrical and electronic components using such methods as transfer molding, injection molding, potting, casting, powder coating, immersion and dripping.

A contemporary trend within the realm of electrical and electronic components is the shift toward smaller size and lighter weight. In the particular case of integrated circuit (IC) components, while the chips are becoming larger due to an increasing degree of integration, it is necessary for the packages to be made smaller and thinner. Moreover, in order to economize on space, IC components are now directly installed on the printed-circuit board by so-called surface mounting. In this method, the smaller, thinner IC component is directly exposed to the high temperatures of the solder bath, and this causes various problems, such as package cracking. This creates the requirement for increased package strength, one tactic here being the increase of the proportion of silica added to the epoxy resin composition.

Moreover, internal stresses develop in curable epoxy resins during curing due to mold shrinkage and temperature variations, and these can damage the electronic component. In addition, thermal cycling causes such problems as the development of package cracking. The addition to the epoxy resin of an elastomer, which functions as a stress-relaxing agent, has been a general tactic for achieving improvement in this area.

However, each of these tactics also results in an increase in the viscosity of the epoxy resin composition itself, which leads to a reduction of its fluidity. This creates a problem in filling a mold, and thus a decline in the productivity during molding operations. Also, the addition of an oil produces flashing and mold staining, and ultimately, again a reduction in productivity. In sum, there is still demand for a curable epoxy resin composition which has good mechanical properties and low internal stresses but which also has an excellent moldability.

Thus, as discussed above, epoxy resin sealing materials designed to have excellent mechanical properties and reduced internal stresses are nevertheless still encumbered by a variety of problems, such as a poor moldability (fluidity, flashing, mold staining) and so forth. The present inventors carried out extensive research into stress-relaxing agents which could be blended into epoxy resins, and discovered that the admixture of a special silicone-modified epoxy resin, or a special silicone-modified phenolic resin, into an epoxy resin gives the following results: the epoxy or phenolic resin component acts as a compatibilizer with the matrix resin and also as a curing agent, while the silicone component is homogeneously microdispersed into the matrix resin in microparticulate form. Furthermore, there are no adverse effects on the resin's moldability or productivity. Accordingly, it was found that the problems discussed above could be solved in a single stroke, and the present invention was achieved based on these findings.

Thus, the present invention takes as its object the introduction of a curable epoxy resin composition which does not suffer from the aforementioned problems, and specifically which has the same moldability as the native epoxy resin but which does not suffer from cracking due to internal stresses. The present invention therefore relates to a curable epoxy resin composition comprising:

(a) 100 parts by weight of an epoxy resin;

(b) up to 100 parts by weight of a phenolic resin; and

(c) 1 to 100 parts by weight of a silicone-modified resin selected from the group consisting of

  (i) a reaction product of an epoxy resin with an amino-modified polysiloxane having an amino group at only one end of its chain, and

  (ii) a reaction product of a phenolic resin with an epoxy-modified polysiloxane having an epoxy group at only one end of its chain.

The epoxy resin comprising component (a) used by the present invention should have at least two epoxy groups in each molecule, and any epoxy resin already known to the art can be used. Such epoxy resins are exemplified by the diglycidyl ether of bisphenol A and its polymeric "bis-epi" epoxy resins, bisphenol F epoxy resins, resorcinol epoxy resins, tetrahydroxyphenylethane epoxy resins, cresol novolac epoxy resins, polyolefin epoxy resins, alicyclic epoxy resins, and their halogenated compounds. This component may be used as the single species or as a mixture of two or more species.

The phenolic resin comprising the optional component (b) used in the present invention is employed as

a curing agent or hardener, and phenol novolac resins, cresol novolac resins, bisphenol A, poly-para-vinylphenol resins, and so forth may be used. While its quantity of addition will vary with the type of resin, in general up to about 100 weight parts, preferably 1 to 80 weight parts, is added per 100 weight parts of component (a). In addition to this curing agent, a curing accelerator such as an imidazole or a phosphine, such as triphenylphosphine, can also be used.

Component (c) of the present invention is selected from the group consisting of a silicone-modified epoxy resin (i) and a silicone-modified phenolic resin (ii). In either case, it is the component which imparts a stress-relaxing effect to the composition of the present invention without lowering its moldability as a molding material, which is the most important object of the present invention.

One constituent element of the silicone-modified epoxy resin (i) is an amino-modified silicone having an amino functional group at only one terminal of the polysiloxane chain as represented by the following average general formula.

$$R_3SiO(R_2SiO)_mSi(R_2)X \qquad \text{(I)}$$

wherein the R is a monovalent hydrocarbon group, X is an amino group-containing monovalent organic group and m is 2 to 1,000. In formula (I), R is the same or different monovalent hydrocarbon group, and is exemplified by alkyl groups such as methyl, ethyl, propyl, and butyl; aryl and aralkyl groups such as phenyl and phenylethyl; and the trimethoxysilylethyl group.

The group X comprises a monovalent organic group which contains one amino group. Examples here are aminopropyl (primary amine) and N-n-butylaminopropyl, N-methyaminoisobutyl, and N-cyclohexylaminopropyl (secondary amines).

The degree of polymerization of the polysiloxane chain under consideration is not specifically restricted. However, the stress-relaxing effect will be unsatisfactory when it is too small. When it is too large, the reactivity with the epoxy resin will be poor, and a silicone-modified epoxy resin with good dispersibility in component (a) cannot be obtained. Based on these considerations, the degree of polymerization should be from 2 to about 1,000 and preferably is from 5 to 600.

Among such silicones which are amino-modified at one end (amino-monoterminated silicone), those having a secondary amino group at one terminal of the polysiloxane chain are preferred within the context of the present invention.

The epoxy resin, which is the other constituent of this first type of component (c), functions to induce or bring about the fine dispersion of the amino-monoterminated silicone in the epoxy resin composition. It may be identical with component (a), but a different type may also be used.

The above-described amino-monoterminated silicone and the epoxy resin are reacted by stirring them, with heating, in the presence of a catalyst such as an imidazole, tertiary amine, or triphenylphosphine. The use of a solvent, for example, dimethylformamide or methyl ethyl ketone, is generally advantageous. The weight ratio of the amino-monoterminated silicone to the epoxy resin to be used should be in the range of about 10:100 to 800:100, preferably 10:100 to 500:100.

Alternatively, when component (c) of the present invention is the silicone-modified phenolic resin (ii), the group X of formula (I) is a monovalent organic group which contains one epoxy group, such as glycidyloxypropyl or 3,4-epoxycyclohexylethyl.

The phenolic resin which is the other constituent of this second type of component (c) functions to induce or bring about the fine dispersion of the epoxy-modified silicone in the epoxy resin comprising component (a) and also acts as part of the curing agent for the epoxy resin. It may be identical with component (b), but a different type may also be used.

In order to form the silicone-modified phenolic resin (ii), the epoxy-modified silicone and phenolic resin are reacted by stirring them, while heating, in the presence of a catalyst such as an imidazole, tertiary amine, or triphenylphosphine. The use of a solvent, for example, formamide, is generally advantageous. The weight ratio of the epoxy-modified silicone to the phenolic resin to be used should be in the range of about 10:100 to 800:100, preferably 10:100 to 500:100.

The silicone-modified epoxy resin (i) or the silicone-modified phenolic resin (ii) should be added at about 1 to about 100 weight parts, preferably at 5 to 50 weight parts, per 100 weight parts of component (a). The addition of too little results in a tenuous manifestation of the effect deriving from the addition of component (c). The addition of too much destroys the balance in the epoxy resin and causes a loss in the native epoxy resin properties.

Various types of additives can also be added to the epoxy resin composition of the present invention,

and examples in this regard are inorganic fillers, as typified by fumed silica, fused silica, crystalline silica, alumina, hydrated alumina, talc, diatomaceous earth, mica, asbestos, calcium carbonate, glass beads, glass fiber, and so forth; flame retardants, as typified by antimony oxide, halogen compounds, and phosphorus compounds; internal release agents, as typified by carnauba wax, the metal salts of higher fatty acids, ester waxes, and so forth; silane coupling agents; dyes; and pigments.

The epoxy resin composition of the present invention is prepared by simply mixing and kneading the aforementioned components (a), (b), and (c) to homogeneity using a mixing device such as a two-roll mill, extruder, kneader mixer, Henschel mixer, and so forth.

The present invention is explained in concrete terms by the following illustrative examples.

The curable epoxy resin compositions were evaluated by the following methods in these examples. The epoxy resin composition was first kneaded for approximately 5 minutes on a two-roll mill heated to approximately 80 degrees Centigrade. After cooling, it was ground and tableted, then transfer molded at 175 degrees Centigrade/74 $kgf/cm^2$/3 minutes, and then post-cured at 180 degrees Centigrade for 6 hours to afford the cured molding. Molding properties, such as the mold releaseability, mold staining and flashing, were evaluated during the molding process, while the flexural strength and flexural modulus were measured on the cured molding. Spiral flow was separately measured on the tablet.

The measurement values for mold staining, flexural strength, flexural modulus, and spiral flow were obtained by the following methods.

Twenty moldings were carried out in the same mold, and staining of the mold surface was then evaluated with the naked eye. The mold staining is reported as either present or absent.

The test bar stipulated in ASTM D-790 was molded under the aforementioned conditions, and the flexural strength and flexural modulus were measured on this test bar using a Tensilon testing machine.

The spiral flow was measured at 175 degrees Centigrade and 74 $kgf/cm^2$ using the mold stipulated in the EMMI standard.

Reference Example 1

Synthesis of silicone-modified epoxy resin (A)

The following were charged to a 300 mL four-neck flask equipped with a thermometer, cooling condenser, and stirring rod and reacted for 3 hours at 130 degrees Centigrade under a nitrogen atmosphere: 20 g polydimethylsiloxane modified with an aminopropyl group at one end having the following formula (amino equivalent weight = 3,900)

$n\text{-}Bu(Me_2)SiO(Me_2SiO)_{50}Si(Me_2)\text{-}CH_2CH_2CH_2\text{-}NH_2$

in which n-Bu and Me hereinafter denote n-butyl and methyl radicals, respectively, 20 g epoxy cresol novolac resin (epoxy equivalent weight = 220), 0.4 g triphenylphosphine as catalyst, and 50 g N,N-dimethylformamide. The reaction mixture converted to a homogeneous, transparent brown solution. After completion of the reaction, the solvent was distilled off to afford a yellowish brown solid with a melting point of approximately 60 degrees Centigrade.

Reference Example 2

Synthesis of silicone-modified epoxy resin (B)

A reaction was conducted under the same conditions as in Reference Example 1, but using 20 g polydimethylsiloxane modified at one end by a secondary amino group as given by the following formula (amino equivalent weight = 3,900)

$n\text{-}Bu(Me_2)SiO(Me_2SiO)_{50}Si(Me_2)\text{-}CH_2C(Me)HCH_2\text{-}N(Me)H$

and 20 g epoxy cresol novolac resin (epoxy equivalent weight = 220). The reaction solution converted to a homogeneous, transparent brown solution. After the completion of the reaction, the solvent was distilled off to give a yellowish brown solid with a melting point of approximately 65 degrees Centigrade.

Reference Example 3

Synthesis of silicone-modified epoxy resin (C)

A reaction was conducted under the same conditions as in Reference Example 1, but using 45 g polydimethylsiloxane modified by an aminopropyl group at one end as given by the following formula (amino equivalent weight = 1,700)

$n\text{-}Bu(Me_2)SiO(Me_2SiO)_{20}Si(Me_2)\text{-}CH_2CH_2CH_2\text{-}NH_2$

and 10 g bisphenol A epoxy resin with an epoxy equivalent weight of 190. The reaction solution converted

to a homogeneous, transparent brown solution. After completion of the reaction, the solvent was distilled off to afford a yellowish brown paste.

Reference Example 4
Synthesis of silicone-modified epoxy resin (D)

Using the same set up as in Reference Example 1, a reaction was conducted as in Reference Example 1, but using 45 g polydimethylsiloxane modified at one end with a secondary amino group as given by the following formula

$n\text{-}Bu(Me_2)SiO(Me_2SiO)_{20}Si(Me_2)\text{-}CH_2C(Me)HCH_2\text{-}N(Me)H$

and 10 g bisphenol A epoxy resin with an epoxy equivalent weight of 220. After the completion of the reaction, the solvent was distilled off to afford a yellowish brown paste.

Examples 1 to 4

The following were mixed (parts reported in Table 1) and then kneaded for 5 minutes on a two-roll mill at 80 to 90 degrees Centigrade: epoxy cresol novolac resin with an epoxy equivalent weight of 220 (EOCN-1020 from Nippon Kayaku Kabushiki Kaisha, Japan), phenol novolac resin with a phenol equivalent weight of 100 (BRG-558 from Showa Kobunshi Kabushiki Kaisha, Japan), fused silica, 2-methyl-4-imidazole (reaction accelerator), carnauba wax (internal release agent), and silicone-modified epoxy resin (A) through (D) as synthesized in Reference Examples 1 through 4. Each mixture was then cooled and ground to give a curable epoxy resin molding composition. The mold releaseability, flashing, flexural strength, flexural modulus, and spiral flow were measured on the composition as described above, and these measurement results are reported in Table 1.

Comparison Examples 1 to 3

Curable epoxy resin molding compositions were prepared as in Examples 1 through 4 from the constituents reported in Table 1. They were then similarly evaluated, and the results of these evaluations are also reported in Table 1. The amino-modified silicone oils E and F used in Comparison Example 2 and Comparison Example 3, respectively, had the chemical structures reported below. These were added during kneading on the two-roll mill.

$$H_2N\text{-}CH_2CH_2CH_2\text{-}(Me_2)SiO(Me_2SiO)_{60}Si(Me_2)\text{-}CH_2CH_2CH_2\text{-}NH_2 \quad \text{(oil E)}$$

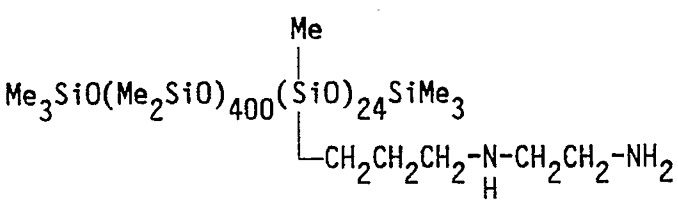

(oil F)

Comparison Example 4
Synthesis of silicone-modified epoxy resin (G)

Using the same set up as in Reference Example 1, a reaction was run as in Reference Example 1 using 20 g of the epoxy resin used in Reference Example 1 and 20 g of the polydimethylsiloxane modified by aminopropyl groups at both ends (oil E) as used in Comparison Example 2. The reaction product was a homogeneous, transparent brown liquid. After completion of the reaction, the solvent was distilled off to afford a yellowish brown solid. This material evidenced rubbery elasticity, and did not melt when heated. It was evaluated as in Examples 1 to 4, and these results are reported in Table 1.

Comparison Example 5
Synthesis of silicone-modified epoxy resin (H)

Using the same set up as in Reference Example 1, a reaction was run as in Reference Example 1 using 20 g of the epoxy resin as used in Reference Example 1 and 20 g of the polydimethylsiloxane modified by side-chain aminoethylaminopropyl groups (oil F) as used in Comparison Example 3. The reaction product was a homogeneous, transparent brown liquid. After completion of the reaction, the solvent was distilled off to afford a yellowish brown solid. This material evidenced rubbery elasticity, and did not melt when heated. It was evaluated as in Examples 1 to 4, and these results are reported in Table 1.

Table 1.

| | examples | | | | comparison examples | | | | |
|---|---|---|---|---|---|---|---|---|---|
| | 1 | 2 | 3 | 4 | 1 | 2 | 3 | 4 | 5 |
| epoxy resin | 90 | 95 | 100 | 100 | 100 | 100 | 100 | 95 | 95 |
| phenolic resin | 50 | 50 | 50 | 50 | 50 | 50 | 50 | 50 | 50 |
| fused silica | 420 | 420 | 420 | 420 | 420 | 420 | 420 | 420 | 420 |
| triphenylphosphine | 0.5 | 0.5 | 0.5 | 0.5 | 0.5 | 0.5 | 0.5 | 0.5 | 0.5 |
| carnauba wax | 1 | 1 | 1 | 1 | 1 | 1 | 1 | 1 | 1 |
| silicone-modified epoxy resin copolymer/parts | A 20 | B 20 | C 15 | D 15 | — | — | — | C 20 | H 20 |
| amino-modified silicone oil type/parts | — | — | — | — | — | E 10 | F 10 | — | — |
| mold releasability * | O | O | O | O | O | × | × | Δ | Δ |
| presence/absence of mold staining | absent | absent | absent | absent | absent | present | present | absent | absent |
| presence/absence of flash | absent | absent | absent | absent | absent | present | present | absent | absent |
| flexural strength | 1130 | 1170 | 1180 | 1210 | 1200 | 920 | 850 | 1020 | 1000 |
| flexural modulus | 1330 | 1200 | 1310 | 1180 | 1500 | 1090 | 1030 | 1250 | 1320 |
| spiral flow | 47 | 52 | 49 | 53 | 50 | 20 | 15 | 25 | 25 |

* CODE: O = Excellent
Δ = Fair
× = Poor

Reference Example 5

Synthesis of silicone-modified phenolic resin (I)

The following were charged to a 300 mL four-neck flask equipped with a thermometer, cooling condenser, and stirring rod and reacted for 4 hours at 140 degrees Centigrade under a nitrogen atmosphere: 10 g of a polydimethylsiloxane modified with a glycidoxypropyl group at one end having the formula

$$\mathrm{n\text{-}Bu(Me_2)SiO(Me_2SiO)_{20}Si(Me_2)\text{-}CH_2CH_2CH_2\text{-}O\text{-}CH_2}\underset{\backslash\;\mathrm{O}\;/}{\mathrm{CH{-}CH_2}}$$

30 g phenol novolac resin (BRG558 from Showa Kobunshi Kabushiki Kaisha, Japan), 0.4 g 2-methylimidazole as catalyst, and 50 g N,N-dimethylformamide. The reaction solution converted to a homogeneous, transparent brown solution. After completion of the reaction, the solvent was distilled off to afford a yellowish brown solid with a melting point of approximately 60 degrees Centigrade.

Reference Example 6
Synthesis of silicone-modified phenolic resin (J)

A reaction was conducted under the same conditions as in Reference Example 5, but using 20 g of the phenol novolac resin and 20 g of the polydimethylsiloxane modified at one end by a glycidoxypropyl group according to Reference Example 5. The reaction solution converted to a homogeneous, transparent brown solution. After the completion of the reaction, the solvent was distilled off to give a yellowish brown paste.

Reference Example 7
Synthesis of silicone-modified phenolic resin (K)

A reaction was conducted under the same conditions as in Reference Example 5, but using 10 g of the phenol novolac resin and 30 g of the polydimethylsiloxane modified at one end by a glycidoxypropyl group according to Reference Example 5. The reaction solution converted to a homogeneous, transparent brown solution. After the completion of the reaction, the solvent was distilled off to give a yellowish brown paste.

Reference Example 8
Synthesis of silicone-modified phenolic resin (L)

Using the same set up as in Reference Example 5, 15 g of a polydimethylsiloxane modified at one end with a glycidoxypropyl group as given by the following formula

$$\mathrm{n\text{-}Bu(Me_2)SiO(Me_2SiO)_{50}Si(Me_2)\text{-}CH_2CH_2CH_2\text{-}O\text{-}CH_2}\underset{\backslash\;\mathrm{O}\;/}{\mathrm{CH{-}CH_2}}$$

15 g phenol novolac resin as used in Reference Example 1, 0.3 g 2-methylimidazole as catalyst, and 50 g N,N-dimethylformamide were reacted for 10 hours at 140 degrees Centigrade under a nitrogen atmosphere. After the completion of the reaction, the solvent was distilled off to afford a yellowish brown paste.

Examples 5 to 8

The following were mixed (parts reported in Table 2) and then kneaded for 5 minutes on a two-roll mill at 80 to 90 degrees Centigrade: epoxy cresol novolac resin with an epoxy equivalent weight of 220 (EOCN-1020 from Nippon Kayaku Kabushiki Kaisha, Japan), phenol novolac resin with a phenol equivalent weight of 100 (BRG558 from Showa Kobunshi Kabushiki Kaisha, Japan), fused silica, 2-methyl-4-imidazole (reaction accelerator), carnauba wax (internal release agent), and silicone-modified phenolic resin (I) through (L) as synthesized in Reference Examples 5 through 8. Each resulting mixture was then cooled and ground to give a curable epoxy resin molding composition. The mold staining, flashing, flexural strength, flexural modulus, and spiral flow were measured on the compositions as described above, and these measurement results are reported in Table 2.

Comparison Examples 6 to 8

Curable epoxy resin molding compositions were prepared as in Examples 5 through 8 from the constituents reported in Table 2. They were then similarly evaluated, and the results of these evaluations are also reported in Table 2. The epoxy-modified silicone oils M and N used in Comparison Example 7 and Comparison Example 8, respectively, had the chemical structures reported below. These were added during kneading on the two-roll mill.

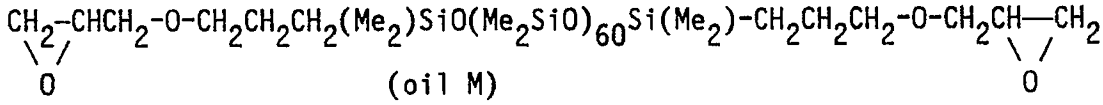

(oil M)

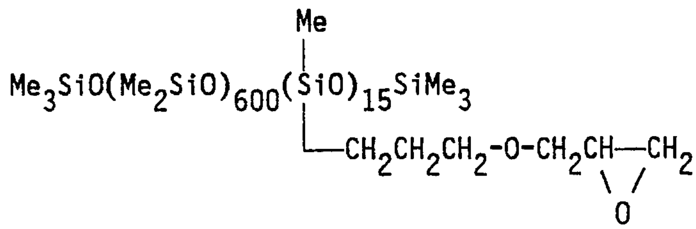

(oil N)

Comparison Example 9
Synthesis of silicone-modified phenolic resin (O)

Using the same set up as in Reference Example 5, a reaction was run as in Reference Example 5 using 20 g of the phenol novolac resin as used in Reference Example 5 and 20 g of the polydimethylsiloxane modified by glycidoxypropyl groups at both ends (M) as used in Comparison Example 7. The reaction product was a homogeneous, transparent brown liquid. After completion of the reaction, the solvent was distilled off to afford a yellowish brown solid with a melting point of approximately 40 degrees Centigrade. It was evaluated as in Examples 5 to 8, and these results are reported in Table 2.

Comparison Example 10
Synthesis of silicone-modified phenolic resin (P)

Using the same set up as in Reference Example 5, a reaction was run as in Reference Example 5 using 20 g of the phenol novolac resin as used in Reference Example 5 and 20 g of the polydimethylsiloxane modified by side-chain glycidoxypropyl groups (N) as used in Comparison Example 8. The reaction product was a homogeneous, transparent brown liquid. After completion of the reaction, the solvent was distilled off to afford a yellowish brown solid. This material evidenced rubbery elasticity, and did not melt when heated. It was evaluated as in Examples 5 to 8, and these results are reported in Table 2.

Table 2.

| | examples | | | | comparison examples | | | | |
|---|---|---|---|---|---|---|---|---|---|
| | 5 | 6 | 7 | 8 | 6 | 7 | 8 | 9 | 10 |
| epoxy resin | 100 | 100 | 100 | 100 | 100 | 100 | 100 | 100 | 100 |
| phenolic resin | 40 | 45 | 50 | 45 | 50 | 50 | 50 | 45 | 45 |
| fused silica | 420 | 420 | 420 | 420 | 420 | 420 | 420 | 420 | 420 |
| 2-methyl-4-imidazole | 0.5 | 0.5 | 0.5 | 0.5 | 0.5 | 0.5 | 0.5 | 0.5 | 0.5 |
| carnauba wax | 1 | 1 | 1 | 1 | 1 | 1 | 1 | 1 | 1 |
| silicone-modified phenolic resin, copolymer/parts | I 20 | J 10 | K 10 | L 10 | — | — | — | O 10 | P 10 |
| epoxy-modified silicone oil type/parts | — | — | — | — | — | M 10 | N 10 | — | — |
| presence/absence of mold staining | absent | absent | absent | absent | absent | present | present | absent | absent |
| presence/absence of flash | absent | absent | absent | absent | absent | present | present | absent | absent |
| flexural strength | 1234 | 1170 | 1120 | 1150 | 1200 | 1050 | 1080 | 1120 | 1100 |
| flexural modulus | 1405 | 1350 | 1300 | 1320 | 1500 | 1430 | 1415 | 1340 | 1300 |
| spiral flow | 47 | 45 | 50 | 46 | 50 | 43 | 37 | 30 | 25 |

## Claims

1. A curable epoxy resin composition comprising:

(a) 100 parts by weight of an epoxy resin;
(b) up to 100 parts by weight of a phenolic resin; and
(c) 1 to 100 parts by weight of a silicone-modified resin selected from the group consisting of (i) a reaction product of an epoxy resin with an amino-modified polysiloxane having an amino group at only one end of its chain, and (ii) a reaction product of a phenolic resin with an epoxy-modified polysiloxane having an epoxy group at only one end of its chain.

2. The composition according to claim 1, wherein said silicone-modified resin (c) is represented by the general formula

$R_3SiO(R_2SiO)_mSi(R_2)X$

in which R is a monovalent hydrocarbon group, X is an amino group-containing monovalent organic group and m is 2 to 1,000.

3. The composition according to claim 1, wherein said silicone-modified resin (c) is represented by the general formula

$R_3SiO(R_2SiO)_mSi(R_2)X$

in which R is a monovalent hydrocarbon group, X is a monovalent organic group containing one epoxy group and m is 2 to 1,000.